(19) Europäisches Patentamt
European Patent Office
Office européen des brevets

(11) EP 4 417 632 A1

(12) EUROPEAN PATENT APPLICATION
published in accordance with Art. 153(4) EPC

(43) Date of publication:
**21.08.2024 Bulletin 2024/34**

(21) Application number: **21960728.0**

(22) Date of filing: **19.10.2021**

(51) International Patent Classification (IPC):
***C08F 220/14*** (2006.01) ***C08F 297/02*** (2006.01)
***C08F 220/44*** (2006.01) ***C08F 220/56*** (2006.01)
***C08F 220/06*** (2006.01) ***C08L 55/00*** (2006.01)
***C08K 3/013*** (2018.01) ***H01M 50/42*** (2021.01)
***H01M 50/446*** (2021.01)

(52) Cooperative Patent Classification (CPC):
**C08F 220/06; C08F 220/14; C08F 220/44; C08F 220/56; C08F 297/02; C08K 3/013; C08L 55/00; H01M 50/42; H01M 50/446;** Y02E 60/10

(86) International application number:
**PCT/KR2021/014605**

(87) International publication number:
**WO 2023/063461 (20.04.2023 Gazette 2023/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.10.2021 KR 20210137117**

(71) Applicant: **Hansol Chemical Co., Ltd**
**Seoul 06169 (KR)**

(72) Inventors:
- **LEE, Go-Eun**
  **Wanju-gun, Jeollabuk-do 55321 (KR)**
- **JANG, Bo-Ok**
  **Wanju-gun, Jeollabuk-do 55321 (KR)**
- **KIM, Jin-Yeong**
  **Wanju-gun, Jeollabuk-do 55321 (KR)**
- **KIM, Seung-Heon**
  **Wanju-gun, Jeollabuk-do 55321 (KR)**
- **PARK, Jun**
  **Wanju-gun, Jeollabuk-do 55321 (KR)**
- **OH, Sae-Wook**
  **Wanju-gun, Jeollabuk-do 55321 (KR)**
- **KWON, Se-Man**
  **Wanju-gun, Jeollabuk-do 55321 (KR)**

(74) Representative: **Cabinet Laurent & Charras**
**Le Contemporain**
**50 Chemin de la Bruyère**
**69574 Dardilly Cedex (FR)**

# (54) COPOLYMER FOR SEPARATOR AND SECONDARY BATTERY COMPRISING SAME

(57) The present invention relates to a copolymer and core-shell particles, a slurry composition, a separator and a secondary battery which comprise the copolymer, the copolymer comprising, with respect to 100 wt% of the total weight of the copolymer, greater than 5 wt% and less than or equal to 70 wt% of an acrylonitrile-based monomer unit, greater than or equal to 15 wt% and less than 90 wt% of an acrylate-based monomer unit, 1-20 wt% of an acrylamide-based monomer unit, and 1-10 wt% of an acrylic acid-based monomer unit.

EP 4 417 632 A1

## Description

### Technical Field

The present disclosure relates to a copolymer, a core-shell particle containing the same, a slurry composition, a separator, and a secondary battery.

### Background Art

With high energy density, lithium secondary batteries are being used extensively in electrical, electronic, telecommunication, and computer industries. Additionally, application fields of lithium secondary batteries are being expanded to high-capacity secondary batteries for hybrid vehicles, electric vehicles, and the like, in addition to small lithium secondary batteries for portable electronic devices.

Although the insulation of lithium-ion secondary batteries is enabled by separators, internal or external battery abnormalities, or shocks cause a short circuit between positive and negative electrodes, which may lead to heat generation and explosion. Thus, ensuring the thermal and chemical safety of the separator is extremely important.

Currently, polyolefin-based films are being used widely as separators, but polyolefins have the disadvantages of severe heat shrinkage at high temperatures and poor mechanical properties.

To improve the stability of such polyolefin-based separators, a porous separator in which a polyolefin porous substrate film is coated with a mixture of inorganic particles and a binder has been developed.

That is, to suppress battery instability due to dendrite and heat shrinkage of polyolefin-based separators caused by high temperatures, one or both sides of the porous separator substrate are coated with the inorganic particles also in combination with the binder. Accordingly, the inorganic particles can provide the function of suppressing the shrinkage rate of the substrate. At the same time, a further safe separator can be manufactured by the coating layer.

To obtain excellent battery characteristics, the coating layer is required not only to be evenly coated but also to have strong adhesive strength to the substrate.

In addition, to cope with the recent high capacity and high output of batteries, the heat resistance of existing separators needs to be further improved.

[Document of related art]

[Patent Document]

(Patent Document 2) Korean Patent No. 10-1430975
(Patent Document 1) Korean Patent Application Publication No. 10-2006-0072065

## Disclosure

### Technical Problem

Accordingly, the present disclosure aims to provide a slurry composition having excellent adhesive strength with the use of a copolymer.

Additionally, the present disclosure aims to provide a separator having excellent heat resistance by applying the slurry composition and a battery having excellent performance with the use of the separator.

This may reduce the defect rate during battery manufacturing and enable a battery having excellent battery resistance and cycle characteristics to be implemented.

However, the problems to be solved by the present disclosure are not limited to the above description, and other problems can be clearly understood by those skilled in the art from the following description.

### Technical Solution

In a first aspect of the present application, a copolymer including an acrylonitrile-based monomer unit in an amount of greater than 5 wt% and 70 wt% or less, an acrylate-based monomer unit in an amount of 15 wt% or greater and less than 90 wt%, an acrylamide-based monomer unit in an amount of 1 wt% or greater and 20 wt% or less, and an acrylic acid-based monomer unit in an amount of 1 wt% or greater and 10 wt% or less, based on 100 wt% of the total weight of the copolymer,

is provided.

In a second aspect of the present application, a core-shell particle including a core and

a shell surrounding the core,
in which the shell contains the copolymer,
is provided.

In a third aspect of the present application, a slurry composition including the copolymer and

inorganic particles
is provided.

In a fourth aspect of the present application, a separator containing the slurry composition is provided.

In a fifth aspect of the present application, a secondary battery including the separator is provided.

## Advantageous Effects

A copolymer of the present disclosure can improve the dispersion stability of a slurry composition, increase adhesive strength to a polyolefin film, which is a separator substrate, and/or to electrodes, and improve the heat resistance of a separator.

Additionally, the defect rate during battery manufacturing can be reduced, and a battery having excellent battery resistance and cycle characteristics can be implemented.

## Best Mode

Hereinafter, the action and effect of the present disclosure will be described in detail through specific embodiments of the disclosure. However, these embodiments are provided only for illustrative purposes, and the scope of the present disclosure is not limited to the following embodiments.

All terms including technical and scientific terms used herein have the same meaning as commonly understood by those skilled in the art to which the present disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Therefore, the configuration of embodiments described herein are merely examples and do not exhaustively present the technical spirit of the present disclosure. Accordingly, it should be appreciated that there may be various equivalents and modifications that can replace the embodiments and the configurations at the time at which the present disclosure is filed.

As used herein, the singular forms are intended to include the plural forms as well, unless the context clearly indicates otherwise. It will be further understood that the terms "comprise", "include", "have", etc. when used herein, specify the presence of stated features, integers, steps, components, or combinations thereof but do not preclude the presence or addition of one or more other features, integers, steps, components, or combinations thereof.

As used herein to represent a specific numerical range, the expression "a to b" means "$\geq$ a and $\leq$ b".

A copolymer, according to a first aspect of the present application, may include: an acrylonitrile-based monomer unit in an amount of greater than 5 wt% and 70 wt% or less; an acrylate-based monomer unit in an amount of 15 wt% or greater and less than 90 wt%; an acrylamide-based monomer unit in an amount of 1 wt% or greater and 20 wt% or less; and an acrylic acid-based monomer unit in an amount of 1 wt% or greater and 10 wt% or less, based on 100 wt% of the total weight of the copolymer.

The higher the content of the acrylonitrile-based monomer unit, the higher the expansion rate of an electrolyte solution in a separator using the copolymer, and the better the ionic conductivity and electrical resistance properties. This is because acrylonitrile has a high affinity to the electrolyte solution.

Additionally, acrylonitrile is highly crystalline and heat-resistant. Thus, the higher the content of the acrylonitrile-based monomer unit, the better the heat resistance of the separator using the copolymer.

However, when the content of the acrylonitrile-based monomer unit exceeds 70 wt%, the pores of the separator may be blocked due to excessive expansion rate of the electrolyte solution, and the electrical resistance properties may be poor. Additionally, the adhesive strength may decrease, causing major problems in the heat resistance properties of the separator.

The acrylate-based monomer unit is characterized by being softened and sticky upon the immersion of the electrolyte solution and thus may improve the adhesive strength after the immersion in the electrolyte solution.

However, when the content of the acrylate-based monomer unit is 90 wt% or higher, the pores of the separator may be blocked, so the air permeability and electrical resistance properties may be poor.

On the other hand, the acrylamide-based monomer unit serves to suppress the expansion of the electrolyte solution and thus may help maintain the heat resistance properties of the separator.

Additionally, the acrylic acid-based monomer unit may improve the stability of the copolymer and the dispersibility of inorganic particles, thus enabling a balanced coating to be formed and the heat resistance of the separator to be improved.

In other words, when the content of the monomer unit does not fall within the above numerical range, one or more among the dispersion stability of a slurry composition to which the copolymer is applied, the adhesive strength of a coating film, and the heat resistance of the separator may be poor.

In one example, the copolymer may be represented by Formula 1 below.

[Formula 1]

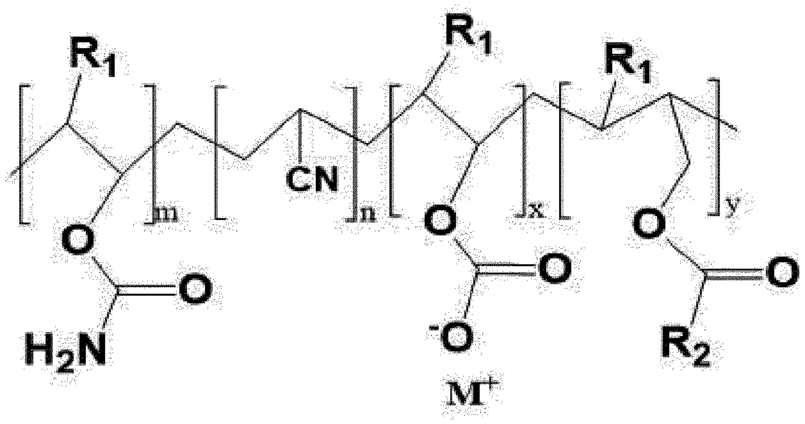

In Formula 1,

$R_1$ may be hydrogen or a straight-chain or branched-chain hydrocarbon having 1 to 4 carbon atoms,
$R_2$ may be each independently hydrogen or a straight-chain or branched-chain hydrocarbon having 1 to 20 carbon atoms,
M may be an alkali metal, and
m, n, x, and y may satisfy m + n + x + y = 1,

where m, n, x, and y in Formula 1 correspond to the weight fractions of the respective monomer units, and the sum of the weight fractions of the respective monomer units is 1.

In one example, $R_1$ in Formula 1 may include one or more selected from the group consisting of hydrogen, methyl, and ethyl.

Additionally, $R_2$ in Formula 1 may include one or more selected from the group consisting of methyl, ethyl, n-propyl, isopropyl, n-butyl, tert-butyl, n-pentyl, n-hexyl, n-heptyl, n-octyl, 2-ethylhexyl, n-nonyl, n-decyl, n-undecyl, lauryl, n-dodecyl, n-tridecyl, n-tetradecyl, n-pentadecyl, cetyl, n-hexadecyl, n-heptadecyl, stearyl, n-octadecyl, n-nonadecyl, n-icosyl, n-henicosyl, n-docosyl, isopentyl, isoheptyl, isooctyl, isononyl, isodecyl, isoundecyl, isododecyl, isotridecyl, isotetradecyl, isopentadecyl, isocetyl, isohexadecyl, isoheptadecyl, isostearyl, isooctadecyl, isononadecyl, isoicosyl, isohenicosyl, and isodocosyl.

On the other hand, M in Formula 1 may be Li, Na, or K, but is not limited thereto.

In one example, the copolymer may further include a cross-linking monomer unit in an amount of 0.005 to 3 parts by weight based on the total weight of the copolymer in an amount of 100 parts by weight.

The cross-linking monomer unit may be one or more selected from the group consisting of an aliphatic difunctional methacrylate and an aromatic difunctional methacrylate.

Preferably, the cross-linking monomer unit is one or more among divinylbenzene and ethylene glycol dimethacrylate.

Unless cross-linked through the cross-linking monomer unit, the adhesive strength of the copolymer is improved. However, the air permeability and electrical resistance of the separator to which the copolymer is applied may be poor.

This may also cause problems when coating an electrode adhesive layer because durability fails to be obtained through cross-linking based on the cross-linking monomer, so the pores of the separator may be blocked while forming a film.

In one example, the copolymer may be a random or block copolymer depending on a synthesis process.

In one example, the copolymer may have a number average molecular weight in a range of 5,000 or greater and 1,000,000 or less.

When the number average molecular weight of the copolymer is less than 5,000, the fluidity of the copolymer may be increased. Thus, the dispersibility and the heat resistance properties of the separator may be poor. When the number average molecular weight is 1,000,000 or greater, the viscosity may be excessively high to be used, and the pores of the separator may be blocked, so the air permeability and resistance may be poor.

In one example, the weight ratio of the acrylate-based monomer unit to the acrylonitrile-based monomer unit (wt% of the acrylate-based monomer unit/wt% of the acrylonitrile-based monomer unit) may be in a range of 0.2 or higher and less than 18.

Within the above weight ratio range, the lower the ratio, the higher the electrolyte affinity to the electrolyte solution. Thus, the ionic conductivity and swelling degree of the electrolyte may be improved. Additionally, within the above weight ratio range, the higher the ratio, the higher the adhesive strength, not to mention that the effect in the electrolyte solution may appear more clearly.

A core-shell particle, according to a second aspect of the present disclosure, includes a core and a shell surrounding the core, the shell containing the copolymer.

Preferably, th core has a median particle diameter in a range of 50 to 250 nm, and the final core-shell particle has a median particle diameter in a range of 300 to 1000 nm.

In the case of not using the core, the absence of the durable structure being firm may cause the particle form to be destroyed, so the pores of the separator may be blocked while forming a film. Thus, the air permeability and resistance may be poor.

This may also cause problems when coating an electrode adhesive layer because when durability fails to be obtained through the core, the pores of the separator may be blocked while forming a film.

On the other hand, the core may include acrylic-based and acrylic acid-based monomer units, but is not limited thereto. Additionally, the core particles may be cross-linked.

A slurry composition, according to a third aspect of the present application, may include the copolymer and inorganic particles.

In other words, the slurry composition may contain a core-shell particle having a form in which the copolymer is contained in the shell.

The inorganic particles may be used without limitation as long as the particles are insulator particles, and are preferably high dielectric constant insulator particles.

Specific examples of the inorganic particles may include $Al_2O_3$, AlO(OH) (boehmite), $SiO_2$, $TiO_2$, $ZrO_2$, ZnO, NiO, CaO, $SnO_2$, $Y_2O_3$, MgO, $BaTiO_3$, $CaTiO_3$, $SrTiO_3$, SiC, $Li_3PO_4$, $Pb(Zr,Ti)O_3$(PZT), $(Pb,La)(Zr,Ti)O_3$(PLZT), and mixtures thereof.

The inorganic particles are not particularly limited in size, but the median particle diameter thereof may be, for example, in a range of 0.01 to 30 $\mu$m and is, more preferably, in the range of 0.1 to 10 $\mu$m. When the median particle diameter of the inorganic particles is smaller than the above preferable range, dispersibility may be poor. When the median particle diameter exceeds the above preferable range, the thickness of the coating layer may be increased after coating, thus deteriorating mechanical properties.

Additionally, the inorganic particles are not particularly limited in form but may have, for example, a spherical, elliptical, or irregular form.

A separator, according to a fourth aspect of the present application, may include the slurry composition.

The separator coating layer containing the above copolymer is suitable for use when forming a single-layer or multilayer coating. As an example, when forming the single-layer coating with inorganic particles, the binding strength of the inorganic particles and the adhesive strength of electrodes may be improved depending on the content.

When forming the multilayer coating on the inorganic particle coating layer through a binder alone, electrode adhesive strength may be improved.

The separator may have a heat shrinkage rate of 5% or lower in both a machine direction (MD, longitudinal direction) and a transverse direction (TD, width direction).

The separator may be manufactured by coating at least one side of a porous substrate film with the slurry composition described above, or by forming the slurry composition into a film form and laminating such a formed film to the porous substrate film.

On the other hand, the separator may be used as a separator for a secondary battery, for example, a separator

for a lithium secondary battery.

One example of manufacturing the separator may include: (a) preparing a polymer solution by dissolving or dispersing the copolymer in a solvent, (b) obtaining a mixture by adding and mixing the inorganic particles to the polymer solution in the a) preparing, and (c) coating and drying one or more regions selected from the group consisting of the surface of a polyolefin-based separator substrate and some of pores in the substrate with the mixture of the b) obtaining.

First, 1) the copolymer is prepared in a polymer solution form in which the copolymer is dissolved or dispersed in an appropriate solvent.

Preferably, the solvent has a solubility index not inferior to that of the copolymer, used as a binder, and has a low boiling point, which is to facilitate the mixing to be uniform and the solvent to be easily removed later. Non-limiting examples of the available solvents may include acetone, tetrahydrofuran, methylene chloride, chloroform, dimethylformamide, N-methyl-2-pyrrolidone (NMP), cyclohexane, water, or mixtures thereof. More preferably, the solvent may be used in a water-dispersed state.

2) The mixture of the inorganic particles and the polymer is prepared by adding and dispersing the inorganic particles to the prepared polymer solution.

Preferably, a process of dispersing the polymer solution and the inorganic particles is performed. In this case, the dispersion may be appropriately performed for 1 to 50 hours. An existing method may be used as a dispersion method, and particularly, a ball milling method is preferable.

The mixture composed of the inorganic particles and the polymer is not particularly limited in composition. However, depending on the composition of the mixture, the thickness, pore size, and porosity of the finally manufactured organic/inorganic composite porous separator of the present disclosure may be controlled.

In other words, the higher the ratio (ratio = I/P) of the inorganic particles (I) to the polymer (P), the higher the porosity of the separator, resulting in an increase in thickness of the separator under the same amount of non-volatile phase (inorganic particle weight plus polymer weight). Additionally, pores are more likely to be formed between the inorganic particles, so the pore size is larger. In this case, the larger the size (particle diameter) of the inorganic particles, the greater the interstitial distance between the inorganic particles, thus increasing the pore size.

3) The manufactured polyolefin-based separator substrate is coated with the prepared mixture of the inorganic particles and the polymer and then dried, thereby obtaining the separator of the present disclosure.

In this case, an existing coating method known in the art may be used as a method of coating the polyolefin-based separator substrate with the mixture of the inorganic particles and the polymer. For example, various methods, such as dip coating, die coating, roll coating, comma coating, or combinations of these methods, may be used. Additionally, when coating the polyolefin-based separator substrate with the mixture of the inorganic particles and the polymer, the coating may be performed on both sides of the separator substrate or selectively performed on only one side.

When using the separator in a secondary battery, lithium ions may be transferred not only through the separator substrate but also through a porous active layer, not to mention that the safety improvement effect described above may be exhibited when an external impact causes internal short circuits.

Additionally, the secondary battery may include a positive electrode, a negative electrode, the separator interposed between the positive and negative electrodes, and an electrolyte solution.

The secondary battery may be manufactured by existing methods known in the art. For example, the secondary battery is manufactured by interposing the separator between the electrodes to obtain an assembly and then injecting the electrolyte solution into the assembly.

The electrodes to be used in combination with the separator are not particularly limited. However, typical positive electrode active materials available for positive electrodes of secondary batteries may be used as a positive electrode active material. Non-limiting examples thereof may include lithium intercalation material, such as lithium manganese oxide (lithiated magnesium oxide), lithium cobalt oxide (lithiated cobalt oxide), a lithium nickel oxide (lithiated nickel oxide), or a composite oxide formed by combinations thereof. Additionally, typical negative electrode active materials available for negative electrodes of existing electrochemical devices may be used as a negative electrode active material. Non-limiting examples thereof may include lithium intercalation material, such as lithium metal, lithium alloys, carbon, petroleum coke, activated carbon, graphite, or other carbon-based materials. Both the electrodes are configured in such forms that the respective electrode active materials, described above, are bound to a positive electrode current collector, that is, a foil made of aluminum, nickel, or combinations thereof, and a negative electrode current collector, that is, a foil made of copper, gold, nickel, copper alloys, or combinations thereof, respectively.

The electrolyte solution preferably has a form in which a salt having a structure such as A+B-, where A+ includes an alkali metal cation such as $Li^+$, $Na^+$, and $K^+$, or an ion composed of combinations thereof, and B- includes an anion such as $PF6^-$, $BF4^-$, $Cl^-$, $Br^-$, $I^-$, $ClO_4^-$, $AsF_6^-$, $CH_3CO_2^-$, $CF_3SO_3^-$, $N(CF_3SO_2)_2^-$, and $C(CF_2SO_2)_3^-$, or an ion composed of combinations thereof, is dissolved and dissociated in an organic solvent composed of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone (GBL), or a mixture thereof.

In addition to typical winding processes, a process of laminating and folding the separator and the electrodes is usable as a process of applying the separator to a battery.

**Mode for Invention**

Hereinafter, the present application will be described in more detail using examples, but the present application is not limited thereto.

[Preparation Example 1] Preparation of copolymer

**Preparation of core particles**

Distilled water in an amount of 380 parts by weight and an emulsifier in an amount of 0.1 to 3 parts by weight with respect to a monomer mixture (A) in an amount of 100 parts by weight were added to a reaction vessel and heated to a temperature of 80°C while injecting high-purity nitrogen gas thereinto.

Ammonium persulfate, a degradable initiator, in an amount of 0.1 to 3 parts by weight with respect to the monomer mixture (A) in an amount of 100 parts by weight was added to the reaction vessel prepared at a temperature of 80°C to perform continuous emulsion polymerization, thereby preparing core particles.

The monomer mixture (A), including a (meth)acrylate-based monomer in an amount of 90 parts by weight and a (meth)acrylic acid-based monomer in an amount of 10 parts by weight, was prepared by further mixing divinylbenzene in an amount of 0.1 to 1 part by weight with respect to the monomer mixture (A) in an amount of 100 parts by weight.

**Preparation of core-shell particles**

Distilled water in an amount of 140 parts by weight, an emulsifier in an amount of 0.1 to 3 parts by weight with respect to a monomer mixture (B), used in shell preparation, in an amount of 100 parts by weight, and the prepared core particles in an amount of 0.1 to 15 parts by weight were added to a reaction vessel and heated to a temperature of 70°C while injecting high-purity nitrogen gas thereinto.

Ammonium persulfate, a degradable initiator, in an amount of 0.05 to 3 parts by weight with respect to the monomer mixture (B) in an amount of 100 parts by weight was added to the reaction vessel prepared at a temperature of 70°C to perform continuous emulsion polymerization, thereby preparing core-shell particles.

In the prepared core-shell particles, the carboxylic acid moiety present in the shell was ionized by adding an aqueous solution of metal hydroxide (NaOH, LiOH, or KOH).

The monomer mixture (B) was prepared by adjusting the appropriate amounts of acrylamide monomers (AAm), acrylonitrile monomers (AN), acrylic acid monomers (AA), and butyl acrylate (BA) and further mixing divinylbenzene in an amount of 0.05 to 3 parts by weight with respect to the monomer mixture (B) in an amount of 100 parts by weight.

The prepared core-shell particles were used as a binder.

[Preparation Example 2] Preparation of porous film-coating slurry

Inorganic particles (alumina having a median particle diameter of 0.5 μm) and the core-shell particles (binder) prepared by Preparation Example 1 were mixed to a non-volatile phase weight ratio of 96:4. Then, distilled water was added and mixed to a non-volatile phase concentration of 35%. The resulting mixture was sufficiently dispersed using a ball milling method or a mechanical stirrer to prepare a slurry.

[Preparation Example 3] Manufacturing of separator

A polyolefin porous substrate (polyethylene (PE), polypropylene (PP), and the like) was coated with the porous film-coating slurry prepared by Preparation Example 2 to form an inorganic coating layer. Various methods, such as dip coating, die coating, gravure coating, comma coating, and the like, were available as a coating method.

Additionally, methods, including warm air drying, hot air drying, vacuum drying, infrared drying, and the like, were used for drying after the coating, where the drying temperature was in a range of 60°C to 85°C.

The inorganic coating layer formed on one or both sides had a thickness in a range of 1 to 6 μm. When the thickness was smaller than 1 μm, there was a problem in that the heat resistance of the separator was significantly poor. When the thickness exceeded 6 μm, the thickness of the separator was excessively large, resulting in a decrease in battery energy density and an increase in battery resistance.

[Examples 1 to 4 and Comparative Examples 1 to 6]

In preparing the core-shell particles of Preparation 1, Examples 1 to 4 and Comparative Examples 1 to 6 were prepared according to Preparation Example 1 by adjusting the composition ratio of the monomers in the monomer mixture (B), used for shell preparation, the use of a cross-linking monomer, and the use of the core particles, as shown in Table 1 below.

Using the binder copolymers prepared by Examples 1 to 4 and Comparative Examples 1 to 6, porous film-coating slurries and separators were prepared and manufactured according to Preparation Examples 2 and 3, respectively.

[Table 1]

| Classification | Monomer composition (wt%) | | | | Cross-linked not | Core particle |
|---|---|---|---|---|---|---|
| | AN | BA | AAm | AA | | |
| Example 1 | 45 | 45 | 5 | 5 | O | O |
| Example 2 | 35 | 55 | 5 | 5 | O | O |
| Example 3 | 65 | 25 | 5 | 5 | O | O |
| Example 4 | 15 | 75 | 5 | 5 | O | O |
| Comparative Example 1 | 80 | 10 | 5 | 5 | O | O |
| Comparative Example 2 | 5 | 90 | 2.5 | 2.5 | O | O |
| Comparative Example 3 | 65 | 30 | 0 | 5 | O | O |
| Comparative Example 4 | 65 | 30 | 5 | 0 | O | O |
| Comparative Example 5 | 45 | 45 | 5 | 5 | X | O |
| Comparative Example 6 | 45 | 45 | 5 | 5 | O | X |

In Table 1 above, "O" indicates that cross-linking was involved, or the core particles were applied, and "X" indicates that cross-linking was not involved, or the core particles were not applied.

As shown in Table 1 above, the cross-linking monomer was not used in the shell preparation step of Comparative Example 5, and the core particles were not used in Comparative Example 6.

[Evaluation Example 1] Expansion rate of electrolyte solution in binder film

The core-shell particles (binder) of Examples 1 to 4 and Comparative Examples 1 to 6 were dried at a temperature of 60°C for 6 hours to prepare a binder film. The dried binder film was weighed to 0.2 g, placed in 30 g of an electrolyte solution, and then immersed therein at a temperature of 60°C for 72 hours. The swollen binder film was taken out. Then, the electrolyte solution on the surface was removed, and the weight was measured to calculate the degree of expansion rate relative to the electrolyte solution.

[Evaluation Example 2] Adhesive strength of porous film-coating slurry

The separator, manufactured according to Preparation Example 3 using the core-shell particles (binder) of Examples 1 to 4 and Comparative Examples 1 to 6, and electrodes were cut to a size with a width of 25 mm and a length of 100 mm.

A double-sided tape having an area with a width of 20 mm and a length of 40 mm was attached to an acrylic plate having an area with a width of 40 mm and a length of 100 mm. Such a prepared separator was attached to the double-sided tape and lightly pressed 5 times with a hand roller.

The prepared specimen was mounted on UTM (20 kgf load cell) so that one part of the separator was fixed to the upper clip of the tensile strength machine while fixing the bottom part of the tape, attached to one side of the separator, onto the lower clip to measure 180° peel strength at a speed of 100 mm/min. The average value thereof was calculated through measurement performed on five or more specimens prepared per sample.

[Evaluation Example 3] Heat shrinkage rate of separator

Each separator, manufactured according to Preparation Example 3 using the core-shell particles (binder) of Examples 1 to 4 and Comparative Examples 1 to 6, was cut to prepare specimens having a width of 5 cm and a length of 100 mm. These specimens were left in an oven at a temperature of 150°C for 1 hour, and then the shrinkage rate was measured.

[Evaluation Example 4] Dry adhesive strength of separator to electrodes

The separator, manufactured according to Preparation Example 3 using the core-shell particles (binder) of Examples 1 to 4 and Comparative Examples 1 to 6, and electrodes were cut to a size with a width of 25 mm and a length of 100 mm.
Such cut separator and electrodes were compressed in an interposed condition at a temperature of 70°C and a pressure of 500 kg for 30 seconds using hot-press equipment.
The prepared specimen was mounted on UTM (20 kgf load cell) so that one part of the separator was fixed to the upper clip of the tensile strength machine while fixing the bottom part of the tape, attached to one side of the separator, onto the lower clip to measure 180° peel strength at a speed of 100 mm/min. The average value thereof was calculated through measurement performed on five or more specimens prepared per sample.

[Evaluation Example 5] Wet adhesive strength of separator to electrodes

The separator, manufactured according to Preparation Example 3 using the core-shell particles (binder) of Examples 1 to 4 and Comparative Examples 1 to 6, and electrodes were cut to a size with a width of 25 mm and a length of 100 mm.
Such cut separator and electrodes were compressed in an interposed condition at a temperature of 70°C and a pressure of 500 kg for 30 seconds using hot-press equipment.
The specimen, manufactured through compression, was placed in an aluminum pouch, immersed in an electrolyte solution for 1 hour, and then re-compressed using hot press equipment at a temperature of 70°C and a pressure of 500 kg for 10 seconds.
The prepared specimen was mounted on UTM (20 kgf load cell) so that one part of the separator was fixed to the upper clip of the tensile strength machine while fixing the bottom part of the tape, attached to one side of the separator, onto the lower clip to measure 180° peel strength at a speed of 100 mm/min.
The average value thereof was calculated through measurement performed on five or more specimens prepared per sample.

[Evaluation Example 6] Air permeability of separator

The separator, manufactured according to Preparation Example 3 using the core-shell particles (binder) of Examples 1 to 4 and Comparative Examples 1 to 6, was used to measure the time (second) required for 100 cc of air to permeate using an air permeability measuring device.

[Evaluation Example 7] Electrical resistance of separator

The separator, manufactured according to Preparation Example 3 using the core-shell particles (binder) of Examples 1 to 4 and Comparative Examples 1 to 6, lithium (Li) metal, and a SUS plate were each independently interposed to prepare an electrode assembly in a coin-cell type.
An electrolyte solution containing a lithium salt was injected into the prepared electrode assembly, and the electrode assembly was sealed to manufacture a lithium secondary battery.
The impedance of such a manufactured battery was measured using an impedance analyzer. The results thereof are shown in Table 2 below.

[Evaluation Example 8] Ion conductivity of separator

The electrical resistance measured by the method of Evaluation Example 1 was used to calculate the ionic conductivity of the separator, manufactured according to Preparation Example 3 using the core-shell particles (binder) of Examples 1 to 4 and Comparative Examples 1 to 6, by Equation 1 below.

**Equation 1**

Ionic conductivity = thickness of specimen/ (electrical resistance × area of specimen)

The evaluation results for Evaluation Examples 1 to 8 are shown in Table 2 below.

[Table 2]

| Classifica n | Electroly solutio Expansion [%] | Basic properties of separator Inorganic adhesiv strength [gf/mm | Dry adhes strength [gf/mm | Wet adhes strength [gf/mm | Heat shrinkag rate (MD/TD [%] | Ionic conductivity [mS/cm | Resistan [mΩ] | Air permeability [sec/100 |
|---|---|---|---|---|---|---|---|---|
| Example | 1610 | 6.0 | 13.3 | 133.3 | 2/2 | 0.591 | 82.7 | Δ12 |
| Example | 1100 | 8.5 | 14 | 189.3 | 2/3 | 0.56 | 85.4 | Δ65 |
| Example | 1820 | 5.1 | 11.8 | 113 | 1.5/2 | 0.62 | 80.7 | Δ10 |
| Example | 940 | 9.3 | 16.5 | 234 | 4/4.5 | 0.562 | 86.8 | Δ89 |
| Compar e Exampl | 3125 | 3.0 | 6 | 4 | 4.5/5 | 0.632 | 76.7 | Δ164 |
| Compar e Exampl | 890 | 10.1 | 17.2 | 251 | 5/6 | 0.567 | 89.0 | Δ166 |
| Compar e Exampl | 1860 | 4.8 | 11.2 | 93 | 8/9 | 0.619 | 81.2 | Δ10.5 |
| Compar e Exampl | 2010 | 4.1 | 11 | 66 | 6.5/10 | 0.617 | 81.9 | Δ11 |
| Compar e Exampl | 1700 | 6.0 | 14.2 | 190 | 2.5/2.5 | 0.586 | 91.4 | Δ151 |
| Compar e Exampl | 1630 | 5.5 | 13.5 | 161 | 2.5/3 | 0.59 | 91 | Δ149 |

The "△" of the air permeability in Table 2 indicates the difference in air permeability before and after coating the polyolefin porous substrate (polyethylene (PE), polypropylene (PP), and the like) with the porous film-coating slurry prepared by Preparation Example 2.

For example, in the case of Example 1, the air permeability was increased by 12 sec/100 cc after being coated with the porous film-coating slurry compared to that before being coated with the porous film-coating slurry.

In the case of using the core-shell particles (binder) of Examples 1 to 4, it was confirmed that the higher the acrylonitrile content in the shell, the higher the expansion rate of the electrolyte solution, the higher the ionic conductivity, and the lower the electrical resistance.

On the other hand, it is confirmed that the higher the acrylonitrile content in the shell, the better the adhesive strength (inorganic, dry, and wet).

In the case of using the core-shell particles (binder) of Comparative Example 1, where the acrylonitrile content in the shell exceeded 70 wt%, and the butyl acrylate content in the shell was lower than 15 wt%, it was confirmed that the expansion rate of the electrolyte solution was significantly increased.

In other words, although the ionic conductivity was extremely good due to the increased acrylonitrile content in the shell, the pores of the separator were blocked, and the electrical resistance was increased due to excessive expansion of the electrolyte solution caused by high affinity to the electrolyte solution.

Additionally, the firm nature of the acrylonitrile in the shell and excessive electrolyte expansion reduce the adhesive strength. The reduced adhesive strength may ultimately cause major problems in the heat resistance performance of the separator.

In the case of using the core-shell particles (binder) of Comparative Example 2, where the acrylonitrile content in the shell was 5 wt% or lower, and the butyl acrylate content in the shell was 90 wt% or higher, it was confirmed that the adhesive strength and the ionic conductivity were significantly improved.

However, due to the softened and sticky nature thereof in the electrolyte solution phase, the pores of the separator were blocked, thus significantly reducing the air permeability and resistance.

In the case of using the core-shell particles (binder) of Comparative Example 3, not containing acrylamide in the shell, the expansion rate of the electrolyte solution was higher, and the heat shrinkage rate was higher than those in the case of using the core-shell particles (binder) of Example 1, where the acrylonitrile and acrylate contents in the shell were the same as those in the case of Comparative Example 3 while containing acrylamide, confirming that the heat resistant properties were poor.

In the case of using the core-shell particles (binder) of Comparative Example 4, not containing acrylic acid in the shell, the heat shrinkage rate was higher than that in the case of using the core-shell particles (binder) of Example 3, where the acrylonitrile content in the shell was the same as that in the case of Example 3 while containing acrylic acid, confirming that the heat resistance properties were poor.

In the case of using the core-shell particles (binder) of Comparative Example 5, where the shell was not cross-linked, it was confirmed that the air permeability and electrical resistance properties were poor compared to the case of using the core-shell particles (binder) of Example 1, where the monomer contents in the shell were the same as those in the case of Comparative Example 5 while the shell was cross-linked.

In the case of using the particles (binder) of Comparative Example 6, not containing the core particles, it was confirmed that the air permeability and electrical resistance properties were poor compared to the case of using the core-shell particles (binder) of Example 1, where the monomer contents in the shell were the same as those in the case of Comparative Example 6 while containing the core particles,

As a result, the separator, manufactured using the core-shell particles (binder) of Examples 1 to 4, had excellent adhesive strength to the substrate and excellent heat resistance properties at a degree of less than 5% at a temperature of 150°C.

Additionally, it is confirmed that excellent adhesive strength to the electrodes enables the characteristics of the separator, which are advantageous in reducing the defect rate and maintaining the electrical resistance and cycle during the battery manufacturing, to be realized.

The scope of the present disclosure is defined by the appended claims rather than the detailed description presented above. All changes or modifications derived from the meaning and scope of the claims and the concept of equivalents should be construed to fall within the scope of the present disclosure.

**Industrial Applicability**

A copolymer of the present disclosure is capable of improving the dispersion stability of a slurry composition, increasing the adhesive strength to a polyolefin film, which is a separator substrate, and/or to electrodes, and improving the heat resistance of a separator.

Additionally, the defect rate during battery manufacturing is reducible, and a battery having excellent battery resistance and cycle characteristics is implementable.

## Claims

1. A copolymer comprising:

   an acrylonitrile-based monomer unit in an amount of greater than 5 wt% and 70 wt% or less;
   an acrylate-based monomer unit in an amount of 15 wt% or greater and less than 90 wt%;
   an acrylamide-based monomer unit in an amount of 1 wt% or greater and 20 wt% or less, and
   an acrylic acid-based monomer unit in an amount of 1 wt% or greater and 10 wt% or less, based on 100 wt% of the total weight of the copolymer.

2. The copolymer of claim 1, wherein the copolymer is represented by Formula 1,

   [Formula 1]

   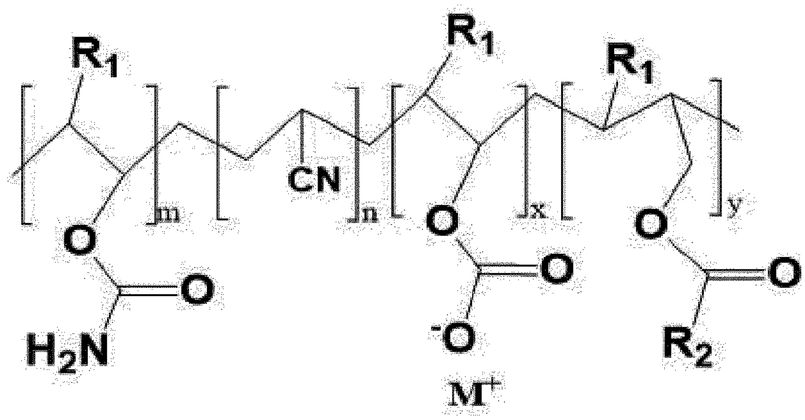

   where in Formula 1, $R_1$ is hydrogen or a straight-chain or branched-chain hydrocarbon having 1 to 4 carbon atoms,
   $R_2$ is each independently hydrogen or a linear or branched hydrocarbon having 1 to 20 carbon atoms,
   M is an alkali metal, and
   m, n, x, and y satisfy m + n + x + y = 1.

3. The copolymer of claim 2, wherein $R_1$ in Formula 1 comprises one or more selected from the group consisting of hydrogen, methyl, and ethyl, and
   $R_2$ in Formula 1 comprises one or more selected from the group consisting of methyl, ethyl, n-propyl, isopropyl, n-butyl, tert-butyl, n-pentyl, n-hexyl, n-heptyl, n-octyl, 2-ethylhexyl, n-nonyl, n-decyl, n-undecyl, lauryl, n-dodecyl, n-tridecyl, n-tetradecyl, n-pentadecyl, cetyl, n-hexadecyl, n-heptadecyl, stearyl, n-octadecyl, n-nonadecyl, n-icosyl, n-henicosyl, n-docosyl, isopentyl, isoheptyl, isooctyl, isononyl, isodecyl, isoundecyl, isododecyl, isotridecyl, isotetradecyl, isopentadecyl, isocetyl, isohexadecyl, isoheptadecyl, isostearyl, isooctadecyl, isononadecyl, isoicosyl, isohenicosyl, and isodocosyl.

4. The copolymer of claim 1, further comprising a cross-linking monomer unit in an amount of 0.005 to 3 parts by weight based on the total weight of the copolymer in an amount of 100 parts by weight.

5. The copolymer of claim 4, wherein the cross-linking monomer unit comprises one or more selected from the group consisting of an aliphatic difunctional methacrylate and an aromatic difunctional methacrylate.

6. The copolymer of claim 1, wherein the copolymer is a random or block copolymer.

7. The copolymer of claim 1, wherein the copolymer has a number average molecular weight of 5,000 or greater and 1,000,000 or less.

8. The copolymer of claim 1, wherein a weight ratio (wt% of the acrylate-based monomer unit/wt% of the acrylonitrile-based monomer unit) of the acrylate-based monomer unit to the acrylonitrile-based monomer unit is in a range of 0.2 or higher and lower than 18.

**9.** A core-shell particle comprising:

a core; and
a shell surrounding the core, the shell comprising the copolymer of claim 1.

**10.** A slurry composition comprising:

the copolymer of any one of claims 1 to 8; and
inorganic particles.

**11.** A separator comprising the slurry composition of claim 10.

**12.** A secondary battery comprising the separator of claim 11.

## INTERNATIONAL SEARCH REPORT

International application No.
**PCT/KR2021/014605**

**A. CLASSIFICATION OF SUBJECT MATTER**

**C08F 220/14**(2006.01)i; **C08F 297/02**(2006.01)i; **C08F 220/44**(2006.01)i; **C08F 220/56**(2006.01)i; **C08F 220/06**(2006.01)i; **C08L 55/00**(2006.01)i; **C08K 3/013**(2018.01)i; **H01M 50/42**(2021.01)i; **H01M 50/446**(2021.01)i

According to International Patent Classification (IPC) or to both national classification and IPC

**B. FIELDS SEARCHED**

Minimum documentation searched (classification system followed by classification symbols)

C08F 220/14(2006.01); H01M 10/052(2010.01); H01M 10/0525(2010.01); H01M 4/131(2010.01); H01M 4/58(2010.01); H01M 50/409(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), Google & keywords: 아크릴로니트릴(acrylonitrile), 아크릴레이트(acrylate), 아크릴아미드(acrylamide), 아크릴산(acrylic acid), 코어-쉘(core-shell), 무기입자(inorganic particle), 분리막(separator)

**C. DOCUMENTS CONSIDERED TO BE RELEVANT**

| Category* | Citation of document, with indication, where appropriate, of the relevant passages | Relevant to claim No. |
|---|---|---|
| X<br>Y | KR 10-2014-0029691 A (LG CHEM, LTD.) 11 March 2014 (2014-03-11)<br>See claims 1-21. | 1-3,6-12<br>4,5 |
| Y | KR 10-2018-0112890 A (IUCF-HYU (INDUSTRY-UNIVERSITY COOPERATION FOUNDATION HANYANG UNIVERSITY)) 15 October 2018 (2018-10-15)<br>See paragraphs [0085] and [0086]. | 4,5 |
| A | KR 10-2019-0064012 A (LG CHEM, LTD.) 10 June 2019 (2019-06-10)<br>See claims 1-18. | 1-12 |
| A | KR 10-2017-0037453 A (SAMSUNG ELECTRONICS CO., LTD. et al.) 04 April 2017 (2017-04-04)<br>See claims 1-17. | 1-12 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 August 2022** | **25 August 2022** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2019)

**INTERNATIONAL SEARCH REPORT**

International application No.
**PCT/KR2021/014605**

**C. DOCUMENTS CONSIDERED TO BE RELEVANT**

| Category* | Citation of document, with indication, where appropriate, of the relevant passages | Relevant to claim No. |
|---|---|---|
| A | KR 10-2020-0085185 A (SAMSUNG SDI CO., LTD.) 14 July 2020 (2020-07-14)<br>See claims 1-15. | 1-12 |

Form PCT/ISA/210 (second sheet) (July 2019)

**INTERNATIONAL SEARCH REPORT**
**Information on patent family members**

International application No.
**PCT/KR2021/014605**

| Patent document cited in search report | | | Publication date (day/month/year) | Patent family member(s) | | | Publication date (day/month/year) |
|---|---|---|---|---|---|---|---|
| KR | 10-2014-0029691 | A | 11 March 2014 | None | | | |
| KR | 10-2018-0112890 | A | 15 October 2018 | KR | 10-1950703 | B1 | 22 February 2019 |
| KR | 10-2019-0064012 | A | 10 June 2019 | KR | 10-2328256 | B1 | 18 November 2021 |
| KR | 10-2017-0037453 | A | 04 April 2017 | CN | 106887552 | A | 23 June 2017 |
| | | | | CN | 106887552 | B | 12 November 2021 |
| | | | | EP | 3147966 | A1 | 29 March 2017 |
| | | | | EP | 3147966 | B1 | 19 December 2018 |
| | | | | US | 10490794 | B2 | 26 November 2019 |
| | | | | US | 2017-0092915 | A1 | 30 March 2017 |
| KR | 10-2020-0085185 | A | 14 July 2020 | CN | 113261153 | A | 13 August 2021 |
| | | | | EP | 3907781 | A1 | 10 November 2021 |
| | | | | KR | 10-2342671 | B1 | 22 February 2021 |
| | | | | US | 2022-0102810 | A1 | 31 March 2022 |
| | | | | WO | 2020-141684 | A1 | 09 July 2020 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 101430975
- KR 1020060072065